# EUROPEAN PATENT SPECIFICATION

(11) **EP 1 309 198 B1**
(45) Date of publication and mention of the grant of the patent: **09.07.2008**
(21) Application number: 02257556.7
(22) Date of filing: 31.10.2002
(51) Int. Cl.: H04N 7/167, H04N 7/24, H04N 5/00

(54) **Digital contents processing apparatus, system and method, and digital broadcasting system**
Vorrichtung, System und Verfahren zur Verarbeitung von digitalen Inhalten, und digitales Rundfunksystem
Dispositif, système et méthode de traitement de contenu digital, et système de diffusion digital

(30) Priority: 02.11.2001 JP 2001338363; 20.08.2002 JP 2002239775
(43) Date of publication of application: 07.05.2003
(73) Proprietor: CANON KABUSHIKI KAISHA, Tokyo (JP)
(72) Inventor: Tagashira, Nobuhiro, Canon Kabushiki Kaisha, Tokyo (JP); Iwamura, Keiichi, Canon Kabushiki Kaisha, Tokyo (JP)
(74) Representative: Beresford, Keith Denis Lewis

(56) References cited:
- WO-A-01/52178
- WO-A-99/48296
- HUNT R: "Technological infrastructure for PKI and digital certification" COMPUTER COMMUNICATIONS, ELSEVIER SCIENCE PUBLISHERS BV, AMSTERDAM, NL, vol. 24, no. 14, 15 September 2001 (2001-09-15), pages 1460-1471, XP004305776 ISSN: 0140-3664
- MARC A KAPLAN: "IBM Cryptolopes, SuperDistribution and Digital Rights Management" IBM RESEARCH, 30 December 1996 (1996-12-30), XP002132994 Retrieved from the Internet: <URL:http://www.research.ibm.com/people/k/ kaplan/cryptolope-docs/crypap.html> [retrieved on 2000-03-14]
- "OPIMA SPECIFICATION" MEETING OPIMA OPEN PLATFORM INITIATIVE FOR MULTIMEDIA ACCESS SPECIFICATION VERSION 1.1, XX, XX, 27 June 2000 (2000-06-27), pages 1-44, XP000997167
- BUTLER LAMPSON, MARTIN ABADI, MICHAEL BURROWS, EDWARD WOBBER: "Authentication in Distributed Systems: Theory and Practice" ACM TRANS.COMPUTER SYSTEMS , vol. 10, 1 November 1992 (1992-11-01), XP002267335

## Description

### BACKGROUND OF THE INVENTION

### Field of the Invention

The present invention relates to a system which can verify the reliability and validity of meta information about various contents and, more particularly, to a system which verifies the reliability and validity of meta information and can control any alteration of program contents on the basis of the verification result and meta information.

### Related Background Art

Along with the recent trends toward digitization, digitization has been progressing in various fields. In the field of broadcasting as well, digitization has progressed, and digital broadcasting has been partly realized. In digital broadcasting, not only a broadcast program but also meta information describing the contents of the program and the like can be transmitted. New services have therefore been proposed, e.g., scene retrieval and digest viewing, by letting a receiver having a large-capacity storage function (to be referred to as a storage hereinafter) automatically store broadcast programs by using such meta information.

In addition, along with the recent trends in hard disks toward larger capacity, hard disk recorders for recording digital broadcast contents have already been commercialized. As described above, the environment for the realization of such services has improved. Furthermore, in digital broadcasting, demands have arisen for measures for protecting broadcast programs against unauthorized duplication of programs.

Note that a receiver having a large capacity storage function is also expected to have a function as a home server, e.g., the function of connecting to the Internet and other information household electrical appliances, and hence is called a "server type receiver". Broadcasts for such server type receivers will be referred to as "server type broadcasts".

Conventionally, as a pay broadcasting system, the conditional access system applied to television broadcasting and high-definition television broadcasting (to be referred to as Hi-Vision broadcasting hereinafter) has been widely studied. Video signals and audio signals to be generally broadcast in the pay broadcasting system are scrambled by some method to prevent unauthorized persons from receiving the signals, whereas signals for de-scrambling the scrambled signals are sent to authorized persons, thus controlling reception.

Information to be sent as a signal for controlling this reception is called related information, which is constituted by information about a key (scramble key Ks) for de-scrambling a scrambled signal, information for determining whether a broadcast program falls within the contract range of the recipient, information by which the broadcasting station forcibly turns on/off a specific receiver, and the like.

When pay television broadcasts or pay Hi-Vision broadcasts are to be provided by satellite broadcasting, related information is transmitted in the form of packets through data channels. In this case, scramble keys and information related to broadcast programs (called program contents) are enciphered to prevent a third party from knowing or tampering with the information.

A scramble key or a key for enciphering program contents is called a work key Kw and is sent to each recipient, together with agreement information indicating the contents of the contract made by the recipient. These pieces of information are called individual information and sent via broadcasting radio waves, a physical medium such as an IC card or magnetic card, a telephone line, and the like. When individual information needs to be enciphered, a maser key Km is used. Master keys Km basically differ depending on recipients.

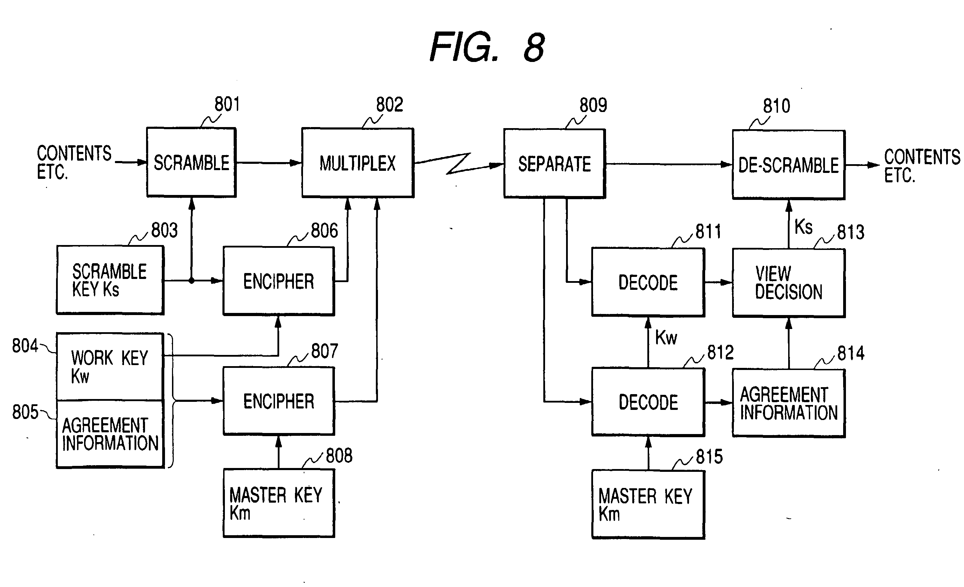

Fig. 8 shows an arrangement for a scrambling scheme. Referring to Fig. 8, a broadcast-station-side apparatus includes a scramble unit 801, multiplexing unit 802, scramble key (Ks) 803, work key (Kw) 804, agreement information 805, enciphering units 806 and 807, and master key (Km) 808.

A reception-side apparatus includes a separation unit 809, de-scrambling unit 810, decoding units 811 and 812, view decision unit 813, agreement information 814, and master key (Km) 815. In server type broadcasting, those who provide meta information are not limited to broadcast providers, and it is expected that meta information is distributed from various providers and users via communication media such as the Internet.

In addition, meta information is assumed to be meta information having various functions, in addition to simple meta information such as the title of a program, for example, meta information that changes the construction of a program such as meta information that generates a digest of a program.

Meta information that changes the construction of a program is used to alter the program, and hence consideration must be given to copyright.

Conventionally, however, no consideration has been given to the mechanism of verifying the reliability and validity of a provider who distributes meta information and those of the meta information.

WO 99/48296 describes an appliance receiving an M4 bit stream and Content Management Protection Objects (CMPO) containing rules for use in controlling reproduction of content. A master object (MCMPO) provides keys for decryption of a CMPO and each CMPO contains a key for decryption of an associated elementary stream.

It is the first object of an embodiment of the present invention to verify the reliability and validity of meta information corresponding to program contents.

It is the second object to provide a system which can control playback and editing of program contents in accordance with the reliability and validity of meta information.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a view showing an outline of a system according to an embodiment of the present invention;
Fig. 2 is a block diagram showing the arrangement of a system according to the embodiment of the present invention;
Fig. 3 is a block diagram showing the arrangement of a system according to the embodiment of the present invention;
Fig. 4 is a block diagram showing the structure of certification authorities according to the embodiment of the present invention;
Fig. 5 is a block diagram showing the arrangement of a system according to the embodiment of the present invention;
Fig. 6 is.a block diagram showing the arrangement of a system according to an embodiment of the present invention;
Fig. 7 is a view showing an example of class information corresponding to the reliability of meta information;.
Fig. 8 is a block diagram showing an example of the arrangement of a conventional system for realizing conditional access broadcasting; and
Fig. 9 is a block diagram showing the arrangement of a system according to an embodiment of the present invention.

### DETAILED DESCRIPTION OF THE PREFERRED EMBODIMENTS

A digital contents processing apparatus, digital contents processing system, digital broadcasting system, digital contents processing method, computer-readable storage medium, and computer program according to the embodiments of the present invention will be described next with reference to the accompanying drawings.

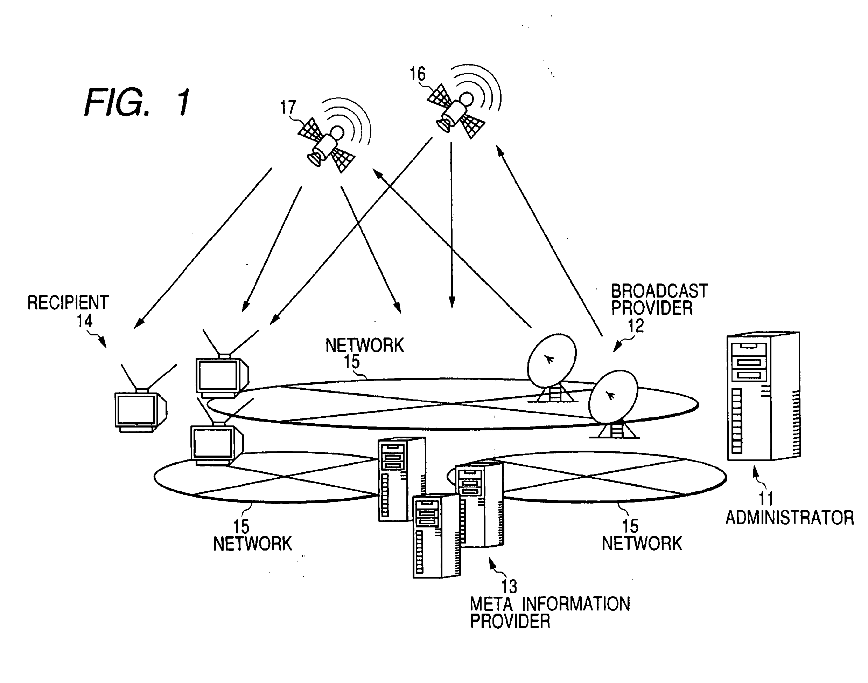

Fig. 1 shows an example of the arrangement of a system according to the first embodiment of the present invention. The first embodiment is comprised of a single or a plurality of administrators, a single or a plurality of broadcast providers, and a single or a plurality of meta information providers. They are mutually connected via various communication media.

An administrator 11 administrates the overall operation of a system. For example, the administrator 11 administrates the issue of keys used in the system.

A broadcast provider 12 is an entity that provides program contents by broadcasting, and generally corresponds to a broadcasting station. Obviously, however, this embodiment is not limited to video broadcasting and can be applied to music broadcasting such as radio broadcasting and can also be applied to broadcasting of general contents such as data broadcasting. In this embodiment, such broadcast contents will be generically termed program contents.

A meta information provider 13 is an entity for providing meta information corresponding to program contents.

In server type broadcasting, program contents are held in a storage medium, and meta information is also held. The server type receiver of a recipient 14 has the function of connecting to a network 15. The server type receiver receives program contents and meta information via communication satellites 16 and 17 and the like. Note that the server type receiver may receive meta information independently of program contents.

With this operation, entities other than the broadcast provider 12 can provide meta information. The recipient 14 is an entity that receives program contents, plays back program contents, and edits program contents on the basis of meta information.

A case wherein the broadcast provider 12 and other entities communicate with each other by using a communication medium called radio broadcasting will be described below. Note that they can communicate with each other via another communication medium such as an optical fiber. The recipient 14 and meta information provider 13 can also communicate with each other via various two-way communication media such as a telephone network, portable telephone network, and cable television network as well as the one-way communication medium, i.e., radio broadcasting via the broadcast provider 12. Note that the broadcast provider 12 may accommodate the meta information provider 13 and administrator 11.

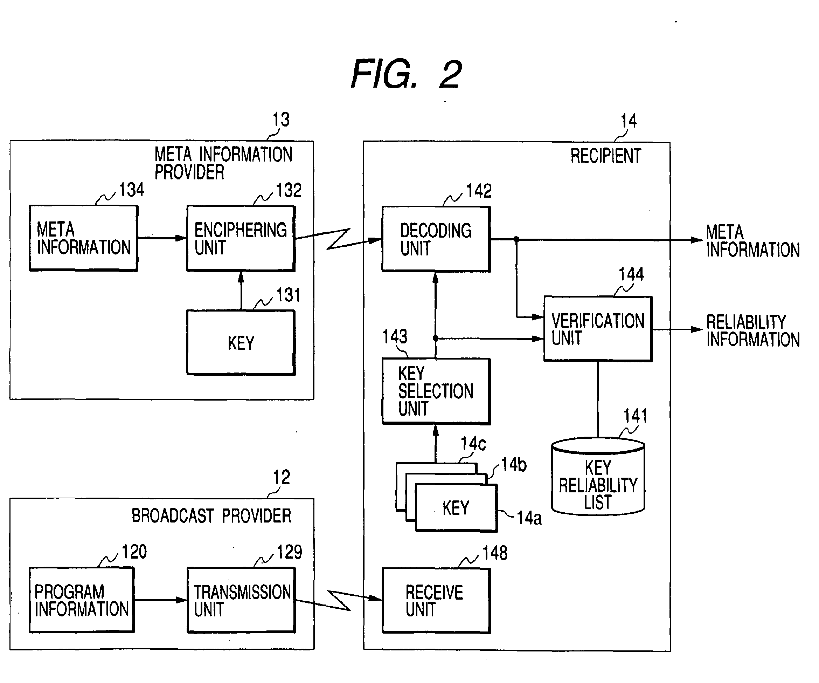

Fig. 2 shows an example of each of the arrangements of the meta information provider 13 and recipient 14. As shown in Fig. 2, the meta information provider 13 is connected to the recipient 14 via a communication medium. The meta information provider 13 holds a first key 131 distributed from the administrator 11. The meta information provider 13 has an enciphering unit 132.

The enciphering unit 132 enciphers meta information with the first key 131 and outputs the enciphered meta information. An enciphering algorithm to be used for this enciphering operation is not specified.

The recipient 14 holds a plurality of keys 14a, 14b, and 14c distributed from the administrator 11 and a key reliability list 141. The plurality of keys 14a to 14c include the key distributed from the administrator 11 to the meta information provider 13.

The key reliability list 141 is data indicating the reliability of each of the keys 14a to 14c which is determined by the administrator 11. For example, the reliability of a key is determined on the basis of the reliability of the meta information provider 13 holding the key. If, for example, the meta information provider 13 differs from the broadcast provider 12, as shown in Fig. 2, the reliability is low. In contrast, if the meta information provider 13 is accommodated in the broadcast provider 12, high reliability information is determined. The recipient 14 also has a decoding unit 142, key selection unit 143, and verification unit 144.

The decoding unit 142 decodes enciphered meta information by using the key information output from the key selection unit 143. The decoding algorithm to be used corresponds to the enciphering algorithm used by the enciphering unit 132 of the meta information provider 13. The key information output from the key selection unit 143 corresponds to the key used by the enciphering unit 132 to encipher the meta information.

The key selection unit 143 selects the key used by the decoding unit 142 from the plurality of keys 14a to 14c. For example, one of the following selection methods may be used: a method of sequentially selecting all the keys 14a to 14c and a method of selecting a key on the basis of the key identification information added to the header portion of the enciphered meta information input to the decoding unit 142.

In this embodiment, enciphered communication is realized by making the meta information provider 13 and recipient 14 share a key. In addition, since meta information is not binary data and has some format, the validity of meta information can be verified by checking whether the information decoded by the decoding unit 142 conforms to a specific format.

The verification unit 144 outputs reliability information on the basis of the decoding result obtained by the decoding unit 142, the key used for decoding, and the key reliability list 141. Assume that the key selection unit 143 selected the key 14a, and the decoding unit 142 could decode the enciphered meta information by using the key 14a. In this case, the verification unit 144 outputs reliability information by referring to the reliability of the key 14a from the key reliability list 141.

If the validity of the meta information can be confirmed in the above manner, reliability corresponding to the key used for decoding can be checked by referring to the key reliability list 141. This makes it possible to determine the reliability of the meta information provider 13 holding the key and the reliability of the meta information.

If the validity of the meta information cannot be checked, the reliability of the meta information may be determined to be the lowest. If, for example, the key reliability list 141 indicates the reliability of the meta information provider 13 holding the key, the reliability information of the meta information coincides with the reliability of the meta information provider 13 which generated the meta information.

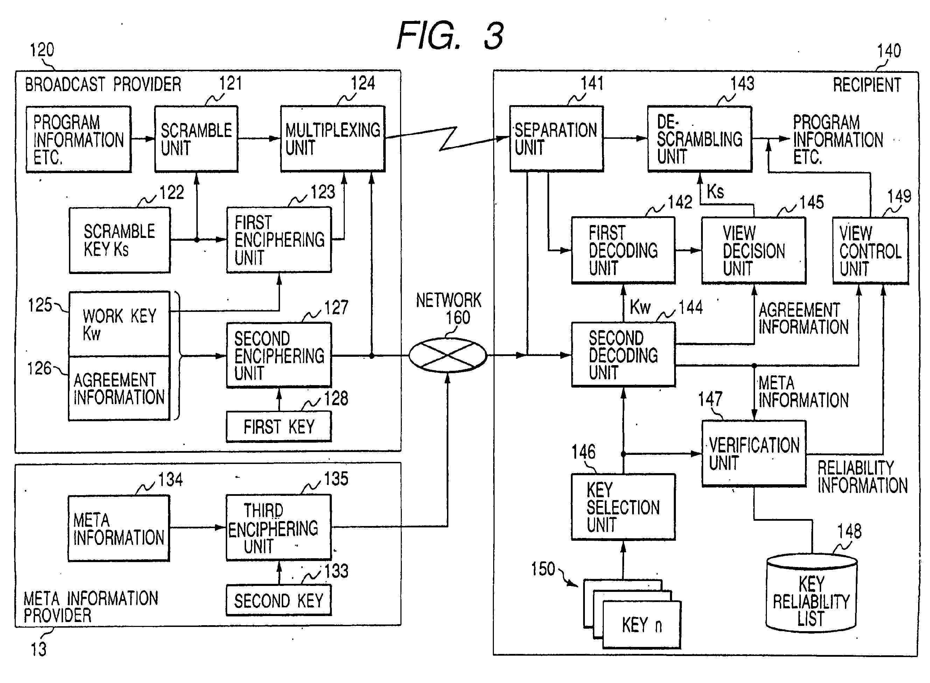

Fig. 3 shows an arrangement in which this embodiment is applied to conditional access broadcasting. The arrangement shown in Fig. 3 is comprised of a broadcast provider 120, meta information provider 130, and recipient 140. The broadcast provider 120 provides conditional access broadcasts for the recipient 140.

Program contents provided by conditional access broadcasting are scrambled by some method to prevent an unauthorized recipient 140 from playing back the program contents. The authorized recipient 140 can play back the scrambled program contents by sending a signal for de-scrambling them.

Referring to Fig. 3, the broadcast provider 120 holds a first key 128 distributed from the administrator 11 and is comprised of a scramble unit 121, multiplexing unit 124, first enciphering unit 123, and second enciphering unit 127.

The scramble unit 121 scrambles program contents by using a scramble key Ks 122. The first enciphering unit 123 enciphers the scramble key Ks 122 by using a work key Kw 125.

The second enciphering unit 127 enciphers the work key Kw 125 and agreement information 126 by using the first key 128. The multiplexing unit 124 multiplexes the enciphered program contents output from the scramble unit 121, the enciphered scramble key Ks 122 output from the first enciphering unit 123, and the enciphered information output from the second enciphering unit 127. Note, however, that the enciphered work key Kw 125 and enciphered agreement information 126 output from the second enciphering unit 127 need not be multiplexed.

Multiplexing the information output from the first enciphering unit 123 and second enciphering unit 127 can reduce the work key Kw 125, agreement information 126, and the like required for control on permission/inhibition of playback in data amount while allowing control on permission/inhibition of program contents.

Referring to Fig. 3, the meta information provider 130 holds a second key 133 distributed from the administrator 11 and has a third enciphering unit 135. The third enciphering unit 135 enciphers meta information 134 generated by the meta information provider 130 with the second key 133 and outputs the enciphered meta information to a network 160.

Referring to Fig. 3, the recipient 140 holds a plurality of keys 150n and key reliability list 148 distributed from the administrator 11 and is comprised of a separation unit 141, de-scrambling unit 143, first decoding unit 142, second decoding unit 144, key selection unit 146, verification unit 147, view decision unit 145, and view control unit 149.

The separation unit 141 separates the multiplexed information received from the broadcast provider 120. The separated enciphered program contents, enciphered scramble key Ks, and enciphered information are output to the de-scrambling unit 143, first decoding unit 141, and second decoding unit 144, respectively.

The key selection unit 146 selects a key used for decoding from the plurality of keys 150n. The second decoding unit 144 decodes the work key Kw 125 and agreement information 126 by using the key output from the key selection unit 146. The second decoding unit 144 decodes the enciphered meta information output from the third enciphering unit 135 via the network 160 by using the key output from the key selection unit 146. The first decoding unit 142 decodes the enciphered scramble key Ks by using the work key Kw 125 input from the second decoding unit 144.

The view decision unit 145 acquires the scramble Ks from the first decoding unit 142 in accordance with the agreement information 126 input from the second decoding unit 144, and inputs the key to the de-scrambling unit 143.

The de-scrambling unit 143 de-scrambles the enciphered program contents input from the separation unit 141 by using the scramble key Ks input from the view decision unit 145. If the key selection unit 146 is inhibited from selecting a specific key of the plurality of keys, the program contents enciphered by the scramble key Ks enciphered by the corresponding work key Kw cannot be reconstructed. If the key selection unit 146 is designed to select only a specific key of the plurality of keys, only the program contents enciphered by the scramble Ks enciphered by the corresponding work key Kw can be reconstructed. That is, by controlling the keys to be selected by the key selection unit 146, the recipient 140 is allowed to play back program contents only for a specific period of time.

The verification unit 147 outputs the reliability information of the meta information on the basis of the key 150n used for decoding and the key reliability list 148.

The view control unit 149 inputs the meta information and the reliability information of the meta information, and controls permission/inhibition of editing of program contents based on the meta information. The view control unit 149 controls such that if meta information has high reliability, editing of the program contents is permitted, whereas if meta information has low reliability, editing of the program contents is inhibited.

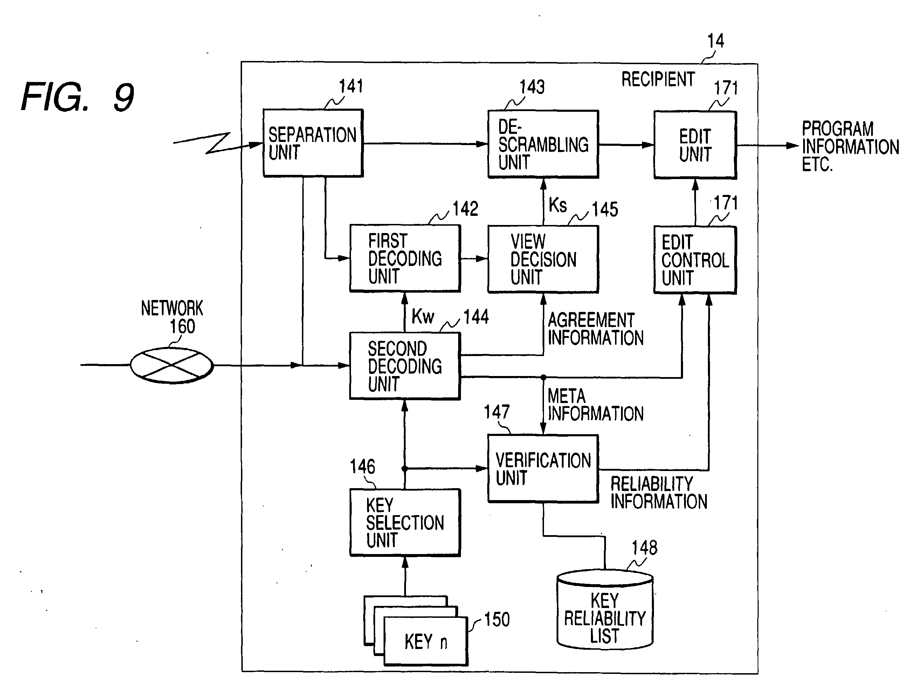

Fig. 9 shows the arrangement of the recipient 140 in a case wherein editing of program contents based on meta information is controlled in accordance with the reliability of meta information.

The recipient 140 in Fig. 9 includes an edit control unit 171 and edit unit 170 in addition to the arrangement shown in Fig. 3.

The edit control unit 171 controls permission/inhibition of editing of program contents by the edit unit 170 in accordance with meta information and reliability information.

The edit control unit 171 may control the degree of editing of program contents by the edit unit 170 in accordance with meta information and reliability information. If, for example, the reliability of meta information is high, the edit unit 170 is allowed to edit the program contents to a high degree. If the reliability of meta information is low, the edit unit 170 is allowed to edit the program contents only to a low degree. Editing to a high degree is editing that changes the construction of program contents, e.g., the plot, including editing for creating a collection of clips of a specific actor by cutting his scenes from a plurality of program contents. Editing to a low degree is editing that maintains the construction of program contents, including editing for creating digests of program contents and adding titles to the heads of program contents. Note that various editing specifications are conceivable, and the present invention is not limited to any specific editing.

In addition, if pieces of meta information are prepared for one program content, the order of priority in which the pieces of meta information are used to produce effects on the program content may be determined by using the reliability.

### (Second Embodiment)

The second embodiment of the present invention will be described below. A system using public-key cryptography using different keys for enciphering and decoding is often used in a public-key infrastructure (PKI) using a certification authority (CA), a certificate, and a certificate revocation list (CRL).

The validity of the public key of a user which is generated by the certification authority CA is guaranteed by using both a certificate for the public key and the public key. In addition, in the process of verifying a certificate, whether the certificate has been revoked can be checked by referring to the certificate revocation list CRL.

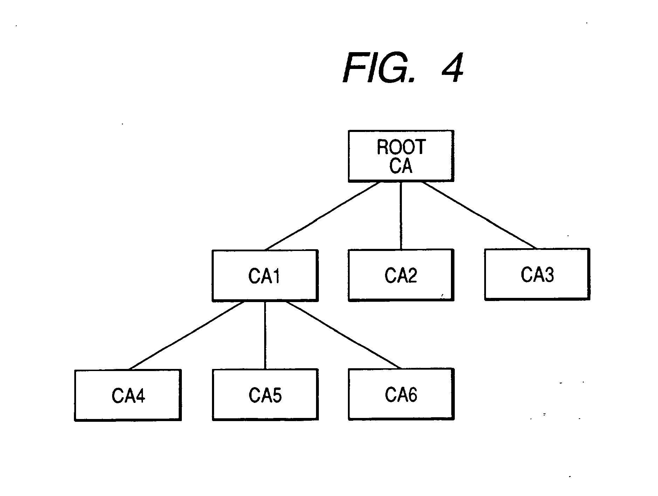

As indicated by Fig. 4 which is a view for explaining the structure, certification authorities CA can be hierarchically arranged such that a lower-level certification authority CA1 is certified by an upper-level certification authority CA. This is called signature chaining of administrators.

In some general certificate issuing services, the class of a certificate is defined in accordance with the strictness of identification in issuing the certificate. In this embodiment, however, with regard to the classes of certificates, a plurality of classes are defined in accordance with the reliability of meta information instead of the strictness of identification in issuing certificates.

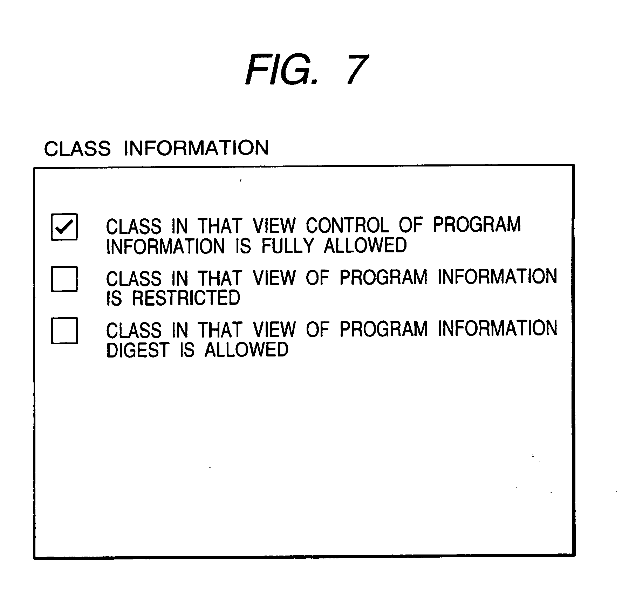

For example, as shown in Fig. 7, the respective classes of certificates are defined with respect to various view control operations, e.g., "class in that view control of program contents is fully allowed", "class in that view of program contents is restricted", and "class in that view of program contents digest is allowed". The certificate revocation list CRL is used to exclude an information provider who has distributed unauthorized meta information or exclude an unauthorized meta information class.

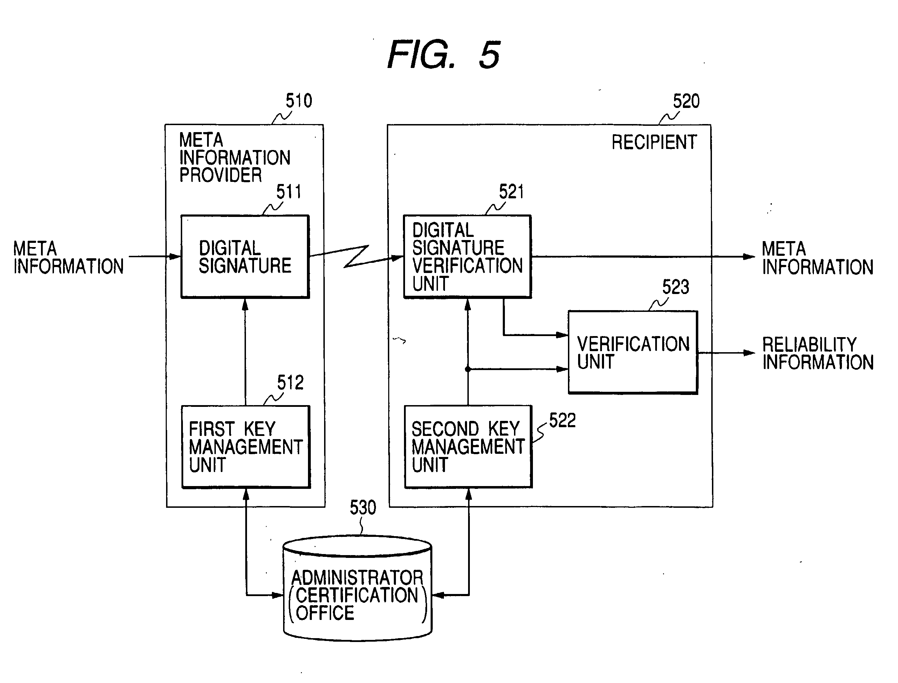

An example of the system arrangement according to the second embodiment is the same as that of the first embodiment except that an administrator has the function of the certification authority CA. Fig. 5 shows an example of the basic arrangement of the second embodiment. The basic arrangement of the second embodiment is constituted by a meta information provider 510 and recipient 520, as shown in Fig. 5.

The meta information provider 510 generates a public key and private key in public-key cryptography, obtains a certificate for the public key from an administrator 530, and holds them. The meta information provider 510 is constituted by a first key management unit 512 and digital signature unit 511.

The first key management unit 512 holds and manages the private key and certificate. The first key management unit 512 also outputs the private key to the digital signature unit 511, as needed. The digital signature unit 511 generates a digital signature on the meta information by using the private key input from the first key management unit 512.

The recipient 520 obtains a certificate for the meta information provider 510 or the like from the administrator 530 and holds it. The recipient 520 also managements the certificate revocation list CRL obtained from the administrator 530. In addition, the recipient 520 is comprised of a digital signature verification unit 521, second key management unit 522, and verification unit 523.

The second key management unit 522 obtains and manages certificates for the meta information provider 510 and the like. Management methods include a method of managing certificates by registering certificates obtained from the administrator 530 in advance and a method of managing certificates by obtaining certificates from the administrator 530 as needed. The second key management unit 522 also manages the certificate revocation list CRL obtained from the administrator 530. In addition, the second key management unit 522 outputs certificates, as needed.

The digital signature verification unit 521 verifies the digital signature on meta information by using the certificate input from the second key management unit 522. The verification unit 523 obtains reliability information from the verification result obtained by the digital signature verification unit 521 and the certificate used for verification. The reliability information is determined by the class of the certificate and signature chaining with respect to the certificate by the administrator 530 when the validity of the digital signature can be verified.

Assume that the signature on meta information is made by a broadcast provider, and the class of a certificate is the highest. In this case, it is determined that the reliability information is ranked highest. Assume that the signature on meta information is made by the meta information provider 510 which is a third party, and the class of the certificate is the lowest. In this case, the reliability information is ranked lowest.

According to the second embodiment, meta information is verified based on the public-key infrastructure PKI, and reliability information is obtained from the verification result on the digital signature on the meta information and the certificate used for the verification. Unlike in the first embodiment, in the second embodiment, since verification is based on the public-key infrastructure PKI, meta information can be verified without holding a plurality of private keys. In addition, the hierarchical or superiority/inferiority relationship between certificates can be easily determined by the levels of the certificates or signature chaining of the administrator 530 with respect to the certificates.

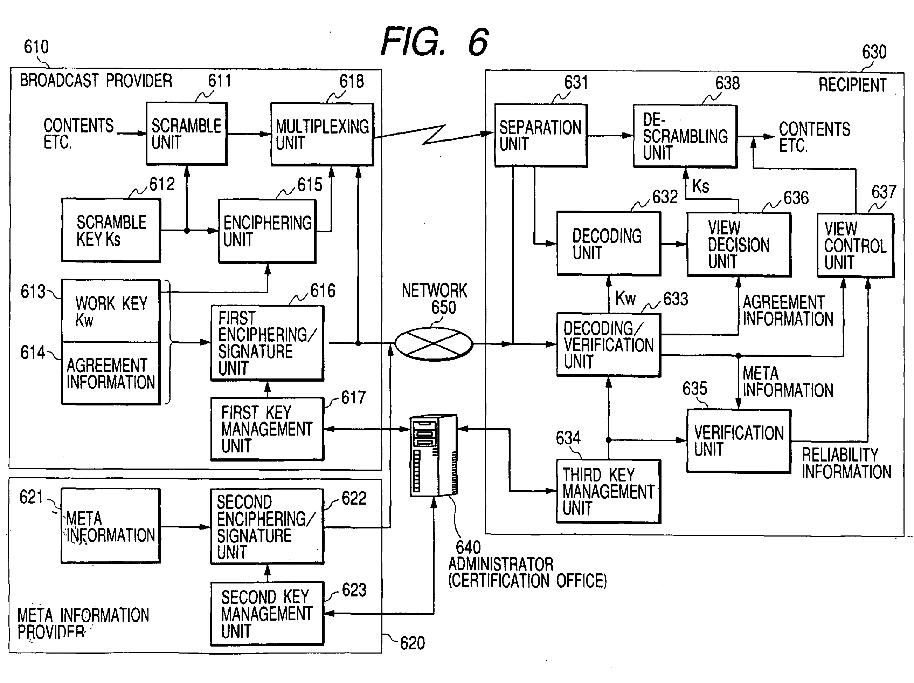

Fig. 6 shows an arrangement in which the basic arrangement shown in Fig. 5 is applied to existing conditional access broadcasting. Referring to Fig. 6, a broadcast provider 610 is comprised of a scramble unit 611, multiplexing unit 618, enciphering unit 615, first enciphering/signature unit 616, and first key management unit 617. The broadcast provider 610, multiplexing unit 618, and enciphering unit 615 have the same arrangements as those in the first embodiment.

The first enciphering/signature unit 616 receives a work key 613 and agreement information 614, enciphers them by using the key input from the first key management unit 617, and generates a digital signature.

The first key management unit 617 manages the private key and certificate of the broadcast provider 610, and also manages the certificate revocation list CRL obtained from an administrator 640, as needed. In addition, the first key management unit 617 generates a secret key or outputs a private key used for digital signature processing, as needed.

Referring to Fig. 6, a meta information provider 620, like the basic arrangement, generates a public key and private key in public-key cryptography, obtains a certificate for the public key from the administrator 640, and holds them. The meta information provider 620 is comprised of a second enciphering/signature unit 622 and second key management unit 623, and generates a digital signature on meta information 621.

The second key management unit 623 holds and manages a private key and certificate, and outputs a private key to the second enciphering/signature unit 622, as needed. The second enciphering/signature unit 622 generates a digital signature on the meta information 621 by using the private key input from the second key management unit 623.

Referring to Fig. 6, a recipient 630 is comprised of a separation unit 631, de-scramble unit 638, decoding unit 632, view decision unit 636, view control unit 637, decoding/verification unit 633, verification unit 635, and third key management unit 634. The separation unit 631, de-scramble unit 638, decoding unit 632, and view decision unit 636 have the same arrangements as those in the first embodiment.

The decoding/verification unit 633 receives enciphered information input from the separation unit 631 or a network 650, decodes the information by using the key input from the third key management unit 634, and verifies the digital signature.

The third key management unit 634 holds and manages the certificate of the broadcast provider 610. The third key management unit 634 also obtains a new certificate and certificate revocation list CRL from the administrator 640 and manages them. In addition, the third key management unit 634 outputs a public key required to verify a digital signature, as needed. These certificate management operations realize various key management operations, which in turn implements a conditional access broadcasting scheme specified for server type broadcasting as in the first embodiment.

The verification unit 635 checks the meta information verification result obtained from the decoding/verification unit 633, the class of the certificate used by the decoding/verification unit 633, and digital signature chaining of the administrator with respect to the certificate, thereby obtaining reliability information.

As described above, according to the second embodiment, meta information is verified, and reliability information is obtained from the verification result on the digital signature on the meta information and the certificate used for the verification.

### (Other Embodiments)

The digital contents processing apparatus according to the embodiments described above is comprised of the CPU or MPU of a computer, a RAM, a ROM, and the like, and can be implemented when the programs stored in the RAM or ROM operate.

This apparatus can therefore be implemented by recording, on a recording medium such as a CD-ROM, the programs which are operated by the computer to realize the above functions, and loading the programs into the computer. As a recording medium for recording the above programs, a flexible disk, hard disk, magnetic tape, magnetooptical disk, nonvolatile memory card, or the like can be used, in addition to a CD-ROM.

The above programs are included in the embodiments of the present invention in a case wherein the functions of the above embodiments are realized when the computer executes the supplied programs, in a case wherein the functions of the above embodiments are realized by the programs in cooperation with the OS (Operating System), another application software, or the like running on the computer, and in case wherein the functions of the above embodiments are realized when all or part of processing of the supplied programs is performed by a function expansion board inserted into the computer or a function expansion unit.

In addition, in order to use the present invention in a network environment, all or some of the programs may be executed by other computers. For example, a remote terminal computer is used to perform screen input processing, whereas another center computer or the like may be used to, for example, make various decisions and record logs.

## Claims

1. A digital contents processing apparatus (140) which processes digital contents and meta information related to the digital contents, comprising:
reception means for receiving the digital contents and the enciphered meta information, wherein the digital contents are received from a first information processing apparatus (12) which deals with the digital contents and the meta information is received from a second information apparatus (13) which deals with the meta information;
decoding means (144) for decoding the received meta information by using a key;
holding means (141,148) for holding a key reliability list of the key;
output means (147) for outputting reliability information based on a decoding result of said decoding means and the key reliability list of the key used on the decoding; and
control means (149) for controlling the reproduction of the digital contents in accordance with the reliability information and the meta information.

2. A method of operating a digital contents processing apparatus (140) which processes digital contents and meta information related to the digital contents, comprising the steps of:
receiving the digital contents and the enciphered meta information, wherein the digital contents are received from a first information processing apparatus (12) which deals with the digital contents and the meta information is received from a second information apparatus (13) which deals with the meta information;
decoding the received meta information by using a key;
holding a key reliability list of the key;
outputting reliability information based on a decoding result of said decoding means and the key reliability list of the key used in the decoding; and
controlling the reproduction of the digital contents in accordance with the reliability information and the meta information.

3. A computer-readable storage medium which records a program for causing a computer to execute the steps defined in claim 2.

4. A program for causing a computer to execute the steps defined in claim 2.

## Patentansprüche

1. Digitalinhalteverarbeitungsvorrichtung (140), die digitale Inhalte und die digitalen Inhalte betreffende Metainformationen verarbeitet, mit:
einer Empfangseinrichtung zum Empfangen der digitalen Inhalte und der verschlüsselten Metainformationen, wobei die digitalen Inhalte von einer ersten Informationsverarbeitungsvorrichtung (12) empfangen werden, die sich mit den digitalen Inhalten befasst, und die Metainformationen von einer zweiten Informationsvorrichtung (13) empfangen werden, die sich mit den Metainformationen befasst;
einer Decodierungseinrichtung (144) zum Decodieren der empfangenen Metainformationen unter Verwendung eines Schlüssels;
einer Halteeinrichtung (141,148) zum Halten einer Schlüsselverlässlichkeitsliste des Schlüssels;
einer Ausgabeeinrichtung (147) zum Ausgeben von Verlässlichkeitsinformationen basierend auf einem Decodierungsergebnis der Decodierungseinrichtung und der bei dem Decodieren verwendeten Schlüsselverlässlichkeitsliste des Schlüssels; und
einer Steuerungseinrichtung (149) zum Steuern der Wiedergabe der digitalen Inhalte gemäß der Verlässlichkeitsinformationen und der Metainformationen.

2. Verfahren zum Betreiben einer Digitalinhalteverarbeitungsvorrichtung (140), die digitale Inhalte und die digitalen Inhalte betreffende Metainformationen verarbeitet, mit den Schritten:
Empfangen der digitalen Inhalte und der verschlüsselten Metainformationen, wobei die digitalen Inhalte von einer ersten Informationsverarbeitungsvorrichtung (12) empfangen werden, die sich mit den digitalen Inhalten befasst, und die Metainformationen von einer zweiten Informationsvorrichtung (13) empfangen werden, die sich mit den Metainformationen befasst;
Decodieren der empfangenen Metainformationen unter Verwendung eines Schlüssels;
Halten einer Schlüsselverlässlichkeitsliste des Schlüssels;
Ausgeben von Verlässlichkeitsinformationen basierend auf einem Decodierungsergebnis der Decodierungseinrichtung und der bei dem Decodieren verwendeten Schlüsselverlässlichkeitsliste des Schlüssels; und
Steuern der Wiedergabe der digitalen Inhalte gemäß der Verlässlichkeitsinformationen und der Metainformationen.

3. Computer-lesbares Speichermedium, das ein Programm zum Veranlassen eines Computers, die in Anspruch 2 definierten Schritte auszuführen, aufzeichnet.

4. Programm zum Veranlassen eines Computers, die in Anspruch 2 definierten Schritte auszuführen.

## Revendications

1. Appareil (140) de traitement de contenu numérique qui traite du contenu numérique et de la méta-information relative au contenu numérique, comprenant :
un moyen de réception destiné à recevoir le contenu numérique et la méta-information chiffrée, dans lequel le contenu numérique est reçu d'un premier appareil (12) de traitement de l'information qui s'occupe du contenu numérique, et la méta-information est reçue d'un second appareil (13) d'information qui s'occupe de la méta-information ;
un moyen (144) de décodage destiné à décoder la méta-information reçue en utilisant une clé ;
un moyen (141, 148) de détention destiné à détenir une liste de fiabilité de clé de la clé ;
un moyen (147) de sortie destiné à sortir une information de fiabilité basée sur un résultat de décodage dudit moyen de décodage et sur la liste de fiabilité de clé de la clé utilisée lors du décodage ; et
un moyen (149) de commande destiné à commander la reproduction du contenu numérique en fonction de l'information de fiabilité et de la méta-information.

2. Procédé de mise en oeuvre d'un appareil (140) de traitement de contenu numérique qui traite du contenu numérique et de la méta-information relative au contenu numérique, comprenant les étapes :
de réception du contenu numérique et de la méta-information chiffrée, dans lequel le contenu numérique est reçu d'un premier appareil (12) de traitement de l'information qui s'occupe du contenu numérique, et la méta-information est reçue d'un second appareil (13) d'information qui s'occupe de la méta-information ;
de décodage de la méta-information reçue en utilisant une clé ;
de détention d'une liste de fiabilité de clé de la clé ;
de sortie d'une information de fiabilité basée sur un résultat de décodage dudit moyen de décodage et sur la liste de fiabilité de clé de la clé utilisée dans le décodage ; et
de commande de la reproduction du contenu numérique en fonction de l'information de fiabilité et de la méta-information.

3. Support de mémorisation lisible par ordinateur qui enregistre un programme pour faire qu'un ordinateur exécute les étapes définies dans la revendication 2.

4. Programme destiné à faire qu'un ordinateur exécute les étapes définies dans la revendication 2.
